# EUROPEAN PATENT APPLICATION

(11) **EP 3 859 182 A1**
(43) Date of publication of application: **04.08.2021**
(21) Application number: 21152607.4
(22) Date of filing: 20.01.2021
(51) Int. Cl.: F16D 55/40, F16D 66/02

(54) **SYSTEMS AND METHODS FOR MEASURING EXTENDED AIRCRAFT BRAKE WEAR LENGTH**

(30) Priority: 29.01.2020 US 202016776250
(71) Applicant: Goodrich Corporation, Charlotte, NC 28217-4578 (US)
(72) Inventor: Al-Tabakha, Emad, Dayton, OH Ohio 45459 (US)
(74) Representative: Dehns

(57) **Abstract**

A brake wear monitoring system (200) for measuring extended wear lengths includes a processing unit, a plurality of linear Hall sensors (204) in electronic communication with the processing unit, a wear pin (206) coupled to a brake stack (112), the wear pin comprising a magnetic portion, wherein the plurality of linear Hall sensors are configured to detect a position of the wear pin via the magnetic portion, and the processing unit is configured to generate an output signal, based upon the position of the wear pin relative to the plurality of linear Hall sensors, to indicate a wear status of the brake stack.

## Description

### FIELD

In general, the arrangements disclosed herein relate to braking systems and methods. More specifically, they relate to systems and methods for monitoring brake wear for aircraft.

### BACKGROUND

Aircraft braking systems typically provide one or more pads which are moved into engagement with a rotating part such as a brake disc to slow or stop the rotation thereof. It is well known that the engagement between the pads and the rotating part causes the thickness of the pads to be worn down over time. Reduction of the pad thickness can lead to failure of the braking system and so it is desirable to monitor the pad thickness and to replace the pads before they reach an end-of-life thickness.

### SUMMARY

A brake wear monitoring system is disclosed, comprising a processing unit, a plurality of linear Hall sensors in electronic communication with the processing unit, a wear pin coupled to a brake stack, the wear pin comprising a magnetic portion, wherein the plurality of linear Hall sensors are configured to detect a position of the wear pin via the magnetic portion, and the processing unit is configured to generate an output signal, based upon the position of the wear pin, to indicate a wear status of the brake stack.

In various embodiments, the brake control system further comprises a housing, wherein the plurality of linear Hall sensors are disposed within the housing.

In various embodiments, the wear pin extends into the housing.

In various embodiments, the magnetic portion of the wear pin is disposed in the housing.

In various embodiments, the magnetic portion of the wear pin defines a tip of the wear pin.

In various embodiments, the plurality of linear Hall sensors are disposed along an axis of the wear pin.

In various embodiments, the brake control system further comprises a piston housing.

In various embodiments, the housing is disposed opposite the piston housing from the brake stack.

A braking arrangement is disclosed, comprising a brake stack, a processing unit, a plurality of linear Hall sensors in electronic communication with the processing unit, a wear pin coupled to a brake stack, the wear pin comprising a magnetic portion, wherein the plurality of linear Hall sensors are configured to detect a position of the wear pin via the magnetic portion, and the processing unit is configured to generate an output signal, based upon the position of the wear pin, to indicate a wear status of the brake stack.

In various embodiments, the brake control system further comprises a housing, wherein the plurality of linear Hall sensors are disposed within the housing.

In various embodiments, the wear pin extends into the housing.

In various embodiments, the magnetic portion of the wear pin is disposed in the housing.

In various embodiments, the magnetic portion of the wear pin defines a tip of the wear pin.

In various embodiments, the plurality of linear Hall sensors are disposed along an axis of the wear pin.

In various embodiments, the brake control system further comprises a piston housing.

In various embodiments, the housing is disposed opposite the piston housing from the brake stack.

In various embodiments, the wear pin is coupled to a pressure plate.

In various embodiments, the wear pin extends through the piston housing.

A method for brake wear monitoring is disclosed, comprising receiving, by a controller, a feedback signal from a plurality of linear Hall sensors, wherein the plurality of linear Hall sensors are disposed along a line of action of a wear pin, calculating, by the controller, a position of the wear pin, wherein the plurality of linear Hall sensors detect the position of the wear pin via a magnetic portion of the wear pin, and sending, by the controller, a wear status signal to indicate a wear status of a brake stack.

In various embodiments, the feedback signal includes a first position of the wear pin detected via a first linear Hall sensor, and a second position of the wear pin detected via a second linear Hall sensor; and an nth position of the wear pin detected via an nth linear Hall sensor, where n is the total number of linear Hall sensors.

In various embodiments, the linear Hall sensors are positioned at a distance from each other to allow continuous measurement of the wear pin position for the full brake wear range.

The foregoing features and elements may be combined in various combinations without exclusivity, unless expressly indicated otherwise. These features and elements as well as the operation thereof will become more apparent in light of the following description and the accompanying drawings. It should be understood, however, the following description and drawings are intended to be exemplary in nature and nonlimiting.

### BRIEF DESCRIPTION OF THE DRAWINGS

The accompanying drawings illustrate various embodiments employing the principles described herein and are a part of this specification. The illustrated embodiments are meant for description only, and they do not limit the scope of the claims, and in which:
FIG. 1A illustrates an exemplary aircraft having a brake system, in accordance with various embodiments;
FIG. 1B illustrates a cross-sectional view of a brake mechanism, in accordance with various embodiments;
FIG. 2 illustrates a schematic view of a brake wear monitoring system, in accordance with various embodiments;
FIG. 3 illustrates a schematic view of a brake wear monitoring system with worn brake pads, in accordance with various embodiments; and
FIG. 4 provides a method for brake wear monitoring, in accordance with various embodiments.

### DETAILED DESCRIPTION

The detailed description of various embodiments herein makes reference to the accompanying drawings, which show various embodiments by way of illustration. While these various embodiments are described in sufficient detail to enable those skilled in the art to practice the disclosure, it should be understood that other embodiments may be realized and that changes may be made without departing from the scope of the disclosure. Thus, the detailed description herein is presented for purposes of illustration only and not of limitation. Furthermore, any reference to singular includes plural embodiments, and any reference to more than one component or step may include a singular embodiment or step. Also, any reference to attached, fixed, connected, or the like may include permanent, removable, temporary, partial, full, and/or any other possible attachment option. Additionally, any reference to without contact (or similar phrases) may also include reduced contact or minimal contact.

As used herein, a first component that is "radially outward" of a second component means that the first component is positioned at a greater distance away from a common axis than the second component. A first component that is "radially inward" of a second component means that the first component is positioned closer to the common axis than the second component. In the case of components that rotate circumferentially about a common axis, a first component that is radially inward of a second component rotates through a circumferentially shorter path than the second component. As used herein, "distal" refers to the direction outward, or generally, away from a reference component. As used herein, "proximal" and/or "proximate" refer to a direction inward, or generally, towards the reference component. All ranges may include the upper and lower values, and all ranges and ratio limits disclosed herein may be combined. Unless specifically stated otherwise, reference to "a," "an" or "the" may include one or more than one and reference to an item in the singular may also include the item in the plural.

The present disclosure provides an electronic system utilizing a series of linear Hall sensors to measure a position of a wear pin in a contactless arrangement. The wear pin may be fitted with a magnetic portion to generate a magnetic field measurable by the linear Hall sensors. As the magnetic portion passes by a linear Hall sensor, an electrical signal is generated that is proportional to the distance between the magnetic portion and the linear Hall sensor. Multiple linear Hall sensors are placed at a predetermined distance from each other to extend the measurement capability of the system. A processing unit may be used to read the electrical signals generated from each linear Hall sensor. The processing unit may accurately calculate the position of the wear pin and generate an output signal that can be received by an onboard controller (e.g., an aircraft main computer or brake control unit) or an offboard controller (e.g., a controller used by ground crew). The output signal may be transmitted via wired or wireless means. In this manner, extended brake pad wear measurements may be accurately calculated for automatic brake wear status detection.

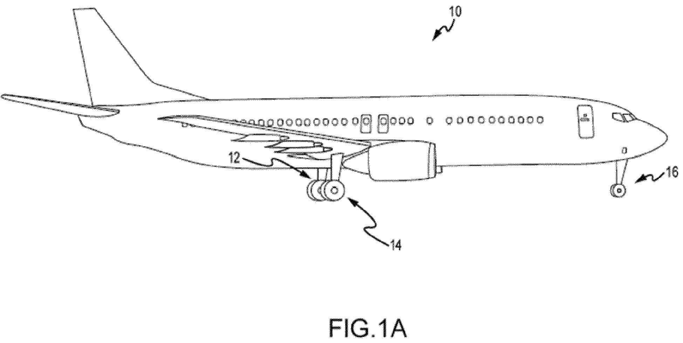

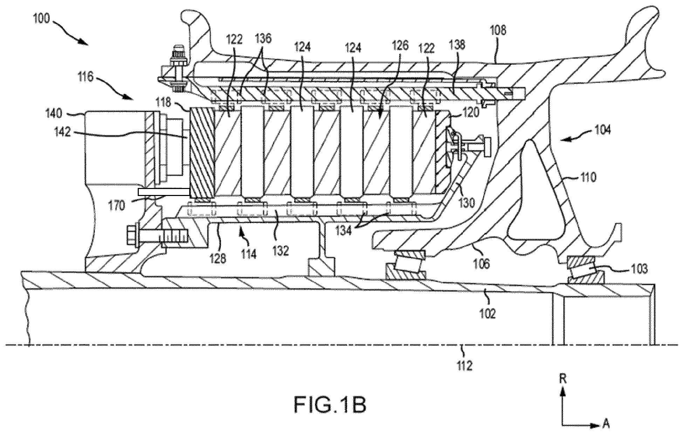

Referring to FIG. 1A, in accordance with various embodiments, an aircraft 10 is illustrated. The aircraft 10 includes landing gear, which may include a left main landing gear 12, a right main landing gear 14 and a nose landing gear 16. The landing gear support the aircraft 10 when it is not flying, allowing the aircraft 10 to taxi, take off and land without damage. While the disclosure refers to the three landing gear configurations just described, the disclosure nevertheless contemplates any number of landing gear configurations. Referring now to FIG. 1B, there is schematically depicted a brake mechanism 100 configured for use on a landing gear, such as, for example, each of the left main landing gear 12 and the right main landing gear 14 described above with reference to FIG. 1A. In various embodiments, the brake mechanism is mounted relative to an axle 102 for use with a wheel 104 disposed on and configured to rotate about the axle 102 via one or more bearing assemblies 103. A central axis 112 extends through the axle 102 and defines a center of rotation of the wheel 104. A torque plate 114 (sometimes referred to as a torque tube) is aligned concentrically with the wheel 104, which is rotatable relative to the torque plate 114.

The brake mechanism 100 includes a piston housing assembly 116, a pressure plate 118 disposed adjacent the piston housing assembly 116, an end plate 120 positioned a distal location from the piston housing assembly 116, and a plurality of rotor disks 122 interleaved with a plurality of stator disks 124 positioned intermediate the pressure plate 118 and the end plate 120. The pressure plate 118, the plurality of rotor disks 122, the plurality of stator disks 124 and the end plate 120 together form a brake stack 126 (or brake heat sink). The pressure plate 118, the end plate 120 and the plurality of stator disks 124 are connected to the torque plate 114 and remain rotationally stationary relative to the axle 102. The plurality of rotor disks 122 are connected to the wheel 104 and rotate relative to the pressure plate 118, the end plate 120 and the plurality of stator disks 124.

The torque plate 114 may include an annular barrel or torque tube 128 and an annular plate or back leg 130. The back leg 130 is disposed at an end distal from the piston housing assembly 116 and may be made monolithic with the torque plate 114, as illustrated in FIG. 1B, or may be made as a separate annular piece and suitably connected to the torque tube 128. The torque plate 114 has a plurality of circumferentially spaced and axially extending splines 132 disposed on an outer surface of the torque tube 128. The plurality of stator disks 124 and the pressure plate 118 include notches or slots 134 on an inner periphery of the disks and the plate for engagement with the splines 132, such that each disk and the plate are axially slidable with respect to the torque tube 128. The end plate 120 is suitably connected to the back leg 130 of the torque plate 114 and is held non-rotatable, together with the plurality of stator disks 124 and the pressure plate 118, during a braking action. The plurality of rotor disks 122, interleaved between the pressure plate 118, the end plate 120 and the plurality of stator disks 124, each have a plurality of circumferentially spaced notches or slots 136 along an outer periphery of each disk for engagement with a plurality of torque bars 138 that are secured to or made monolithic with an inner periphery of the wheel 104.

An actuating mechanism for the brake mechanism 100 includes a plurality of piston assemblies, circumferentially spaced around a piston housing 140 (only one piston assembly is illustrated in FIG. 1B). Each of the plurality of piston assemblies includes a piston 142 configured to apply a load against the pressure plate 118. Upon actuation, the plurality of piston assemblies affect a braking action by urging the pressure plate 118 and the plurality of stator disks 124 into frictional engagement with the plurality of rotor disks 122 and against the end plate 120. Fluid or hydraulic pressure, mechanical springs or electric actuators, among other mechanisms, may be used to actuate the plurality of piston assemblies. Through compression of the plurality of rotor disks 122 and the plurality of stator disks 124 between the pressure plate 118 and the end plate 120, the resulting frictional contact slows or stops or otherwise prevents rotation of the wheel 104. The plurality of rotor disks 122 and the plurality of stator disks 124 are fabricated from various materials, such as ceramic matrix composites, that enable the brake disks to withstand and dissipate the heat generated during and following a braking action.

In various embodiments, a brake wear sensor 170 (or brake wear component) is disposed between the piston housing 140 and the pressure plate 118. The brake wear sensor 170 is configured to monitor wear occurring within the brake stack 126, primarily due to frictional contact occurring between adjacent surfaces of the pressure plate 118, the end plate 120, the plurality of rotor disks 122 and the plurality of stator disks 124. While the frictional contact slows or stops or otherwise prevents rotation of the wheel 104, it also causes wear to occur on the various surfaces within the brake stack 126. Over time, such wear may result in the various components just described becoming progressively thinner in the axial direction. The progressive thinning of the various components results in the need for longer travel of the piston within each piston assembly to affect braking. As described further below, in various embodiments, the brake wear sensor 170 is configured to monitor the progress of such wear within the brake stack 126 and to alert maintenance personnel when repair or replacement of the brake stack 126 is warranted.

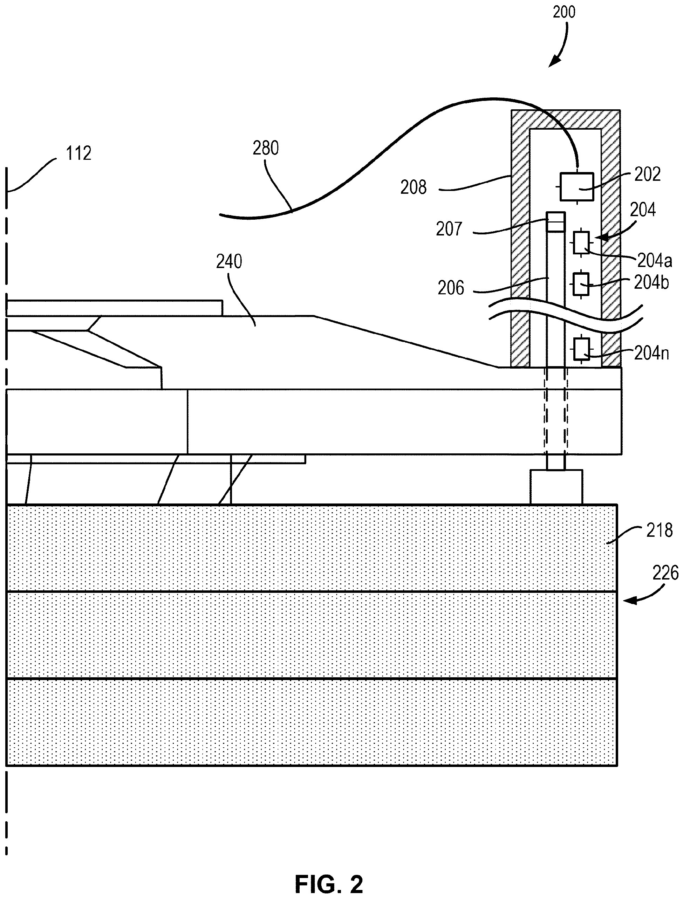

With reference to FIG. 2, a schematic view of a system 200 for brake wear monitoring is illustrated, in accordance with various embodiments. System 200 may be similar to brake mechanism 100, in accordance with various embodiments. System 200 includes a controller 202, a plurality of linear Hall sensors 204, and a wear pin 206 operatively coupled to a brake stack 226. In various embodiments, the wear pin 206 is coupled to an end plate or pressure plate 218 of the brake stack 226. In this manner, the wear pin 206 moves with the pressure plate 218 as the brake stack 226 is actuated. In various embodiments, brake stack 226 is similar to brake stack 126 of FIG. 1. Wear pin 206 may extend from the brake stack 226, through a piston housing 240 and into a sensor housing 208. Sensor housing 208 may be disposed opposite piston housing 240 from brake stack 226. Sensor housing 208 may comprise one or more electronic devices for detecting a position of wear pin 206. In this regard, plurality of linear Hall sensors 204 may be disposed within sensor housing 208. For example, sensor housing 208 may comprise a box, enclosure, frame or the like for mounting linear Hall sensors 204 with respect to wear pin 206, and is not particularly limited.

In various embodiments, wear pin 206 comprises a magnetic portion 207 whereby the linear Hall sensors 204 detect the position of wear pin 206. In various embodiments, magnetic portion 207 defines a tip of the wear pin 206. In this manner, the total length of the wear pin may be minimized. However, it is contemplated that the magnetic portion 207 may be disposed at any suitable location along the wear pin 206 without departing from the scope of the present disclosure. The linear Hall sensors 204 may be in electronic communication with the controller 202. In this manner, the controller 202 receives a feedback signal from each of the linear Hall sensors 204 to determine the position of wear pin 206. For example, in response to the controller 202 detecting, via linear Hall sensors 204, magnetic portion 207 at or near the linear Hall sensor closest to brake stack 226 (i.e., linear Hall sensor 204n), or another predetermined position, the controller 202 may generate an output signal to indicate a wear status of the brake stack, for example indicating that repair or replacement of the brake stack 226 is warranted.

In various embodiments, controller 202 is coupled with sensor housing 208. However, controller 202 may be disposed remotely from sensor housing 208, for example in a brake controller onboard an aircraft, such as an electronic brake controller (EBC) or the like. A data/power cable 280 may be coupled to sensor housing 208 to provide power to controller 202 and/or linear Hall sensors 204. Furthermore, feedback may be transferred via data/power cable 280, in accordance with various embodiments. In various embodiments, feedback from controller 202 and/or linear Hall sensors 204 may be transmitted wirelessly.

In various embodiments, linear Hall sensors 204 may be aligned along the centerline axis 290, or otherwise the line of motion, of wear pin 206. In this manner, the linear Hall sensors 204 effectively detect a position of the wear pin 206 with respect to linear Hall sensors 204 in order to determine an amount of wear on the brake stack 226.

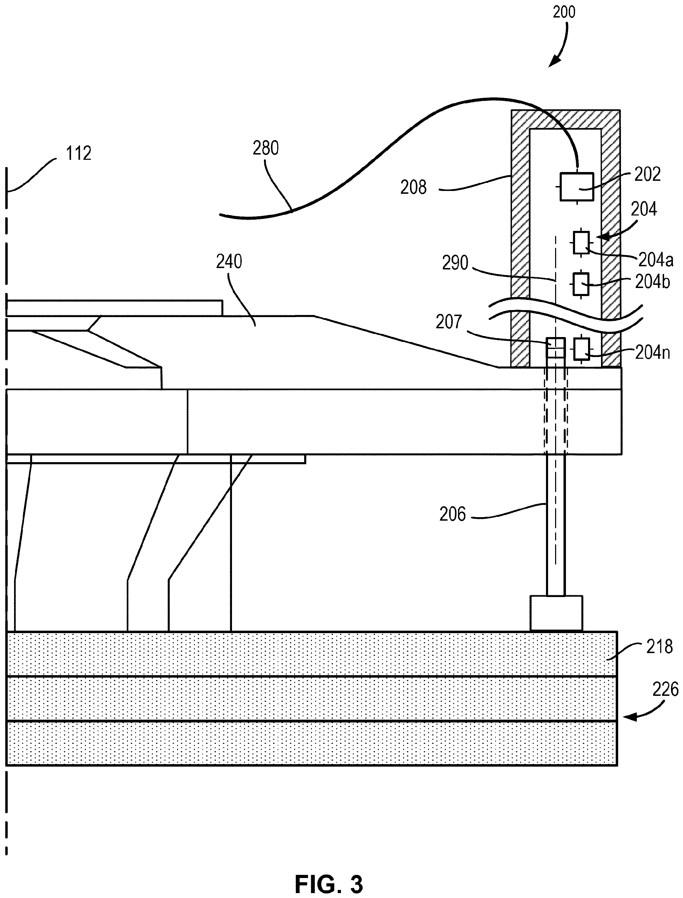

With reference to FIG. 3, system 200 is illustrated with the brake stack 226 in a worn state. In the worn state, each of the brake discs of brake stack 226 may be thinned, causing the wear pin to move further away from sensor housing 208 with the brake stack 226. In the worn state, the magnetic portion 207 may be in a position, as shown in FIG. 3 for example, detectable by linear Hall sensors 204 which indicates to controller 202 that the brake stack 226 is worn to an end-of-life thickness.

In various embodiments, each of the linear Hall sensors 204 is capable of effectively sensing magnetic portion 207 within a predetermined range based upon the specification of the linear Hall sensor 204. In various embodiments, the effective range of each of the linear Hall sensors 204 is up to approximately 1.5 inches (38.1 mm), wherein the term "approximately" in this regard can only mean plus or minus 0.2 inches (5 mm). In various embodiments, the effective range of each of the linear Hall sensors 204 is up to approximately 0.75 inches (19.05 mm). In various embodiments, the effective range of each of the linear Hall sensors 204 is up to approximately 0.5 inches (12.7 mm). In this regard, by disposing a plurality of linear Hall sensors 204 along the linear trajectory (i.e., along centerline axis 290) of the magnetic portion 207, each linear Hall sensor 204 is capable of sensing the magnetic portion 207 before it leaves the effective range of the adjacent linear Hall sensor 204. In this manner, the effective range or length of measurements of the position of wear pin 206 is extended with the linear Hall sensors 204 in the disclosed arrangement. In this regard, each linear Hall sensor 204 may be disposed no further than twice the effective range of the adjacent linear Hall sensor 204.

In various embodiments, the effective range of each linear Hall sensor 204 may overlap such that two or more linear Hall sensors 204 simultaneously detect a position of the magnetic portion 207. In this manner, controller 202 may be configured to determine a position of magnetic portion 207 - and therefore a corresponding amount of brake wear - based upon multiple linear Hall sensor 204 readings. Stated differently, the linear Hall sensors 204 may be configured and positioned (i.e., spaced apart from each other at a predetermined distance along the path of magnetic portion 207) to allow continuous measurement of the position of wear pin 206 for full brake wear range. In this regard, linear Hall sensor 204a may generate a signal proportional to the wear pin 206 position. As the wear pin 206 moves out of range of linear Hall sensor 204a, the wear pin 206 moves within the range of linear Hall sensor 204b, and linear Hall sensor 204b generates a signal proportional to the position of wear pin 206. Calculating the position of magnetic portion 207 may be more accurate using a plurality of linear Hall sensors 204, compared to using only a single sensor. However, it is contemplated that one or more linear Hall sensors 204 may be used.

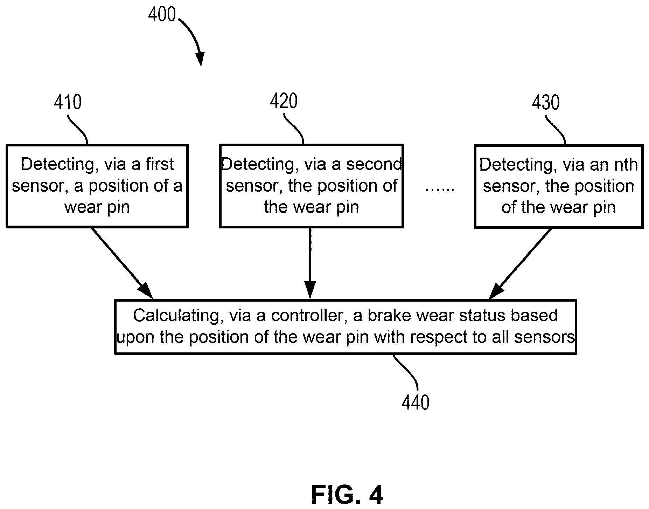

With reference to FIG. 4, a method 400 for brake wear monitoring is provided, in accordance with various embodiments. Method 400 includes detecting, via a first sensor, a position of a wear pin (step 410). Method 400 includes detecting, via a second sensor, the position of the wear pin (step 420). Method 400 includes detecting, via an nth sensor, the position of the wear pin (step 430), where "n" is the total number of linear Hall sensors which can vary depending on the design of the system. Method 400 includes calculating, via a controller, a brake wear status based upon the second position of the wear pin (step 440).

In various embodiments, with reference to FIG. 2 and FIG. 4, step 410 may include detecting, via a first sensor (e.g., linear Hall sensor 204a), a position (also referred to herein as a first position) of wear pin 206. The linear Hall sensor 204a may detect the position based upon detection of a strength of the magnetic field emitted by magnetic portion 207. In various embodiments, the position of wear pin 206 may correspond to the position of brake stack 226 in a neutral state (i.e., without braking pressure being applied). In various embodiments, the position of wear pin 206 may correspond to the position of brake stack 226 in a neutral state (i.e., without braking pressure being applied) or a braking state (i.e., with braking pressure being applied), and with a newly installed brake stack 226 (i.e., without any wear to the brake pads). Furthermore, controller 202 may determine any number of positions from any number of linear Hall sensors 204 without departing from the scope of the present disclosure.

In various embodiments, with reference to FIG. 3 and FIG. 4, step 420 may include detecting, via second sensor (e.g., linear Hall sensor 204b), a position (also referred to herein as a second position) of wear pin 206. The linear Hall sensor 204b may detect the position based upon detection of a strength of the magnetic field emitted by magnetic portion 207.

Step 430 may include detecting, via an nth sensor (e.g., linear Hall sensor 204n), where "n" is the total number of linear Hall sensors, a position (also referred to herein as an nth position) of wear pin 206. The linear Hall sensor 204n may detect the position based upon detection of a strength of the magnetic field emitted by magnetic portion 207. In various embodiments, the position of wear pin 206 may correspond to the position of brake stack 226 in a neutral state (i.e., without braking pressure being applied). In various embodiments, the position of wear pin 206 may correspond to the position of brake stack 226 in a neutral state (i.e., without braking pressure being applied) or a braking state (i.e., with braking pressure being applied), and with a used brake stack 226 (i.e., with worn brake pads).

In various embodiments, step 440 may include calculating, via controller 202, a brake disc wear status based upon the position of the wear pin 206 with respect to each of the linear Hall sensors 204. In this regard, controller 202 may receive feedback from linear Hall sensors 204 indicating a position of wear pin 206, which indicates an amount of wear on brake stack 226. In various embodiments, controller 202 calculates the wear status based upon a single position measurement. In various embodiments, controller 202 calculates the wear status based upon two or more position measurements (e.g., the first position, the second position, and/or the nth position). For example, controller 202 may calculate a difference between the first position and the nth position and determine whether this difference is greater than a threshold value. It is contemplated that various methods for calculating the wear status of brake stack 226 may be implemented by controller 202, including using historical data, pre-determining threshold values, tables stored in memory, etc., and may vary based upon the particular brake stack.

In various embodiments, rather than calculating a wear pin status, the controller 202 may output the position measurement of wear pin 206 to an external display or controller, and a user, such as ground crew, may independently determine the wear status of the brake stack 226 using the position measurement exported by controller 202. For example, a ground crew member may communicate with controller 202 (e.g., either wirelessly or via a wired connection) to read the wear pin position and independently determine whether the brake pads should be serviced. Furthermore, in various embodiments where the controller calculates the wear status, a ground crew member may similarly communicate with controller 202 (e.g., either wirelessly or via a wired connection) to read the wear status for determining whether the brake pads should be serviced.

In various embodiments, controller 202 may send a status signal automatically to a display (e.g., in the cockpit of an aircraft) to indicate that the brake pads are worn and that servicing is desirable.

Benefits, other advantages, and solutions to problems have been described herein with regard to specific embodiments. Furthermore, the connecting lines shown in the various figures contained herein are intended to represent exemplary functional relationships and/or physical couplings between the various elements. It should be noted that many alternative or additional functional relationships or physical connections may be present in a practical system. However, the benefits, advantages, solutions to problems, and any elements that may cause any benefit, advantage, or solution to occur or become more pronounced are not to be construed as critical, required, or essential features or elements of the disclosure.

The scope of the disclosure is accordingly to be limited by nothing other than the appended claims, in which reference to an element in the singular is not intended to mean "one and only one" unless explicitly so stated, but rather "one or more." It is to be understood that unless specifically stated otherwise, references to "a," "an," and/or "the" may include one or more than one, and that reference to an item in the singular may also include the item in the plural. All ranges and ratio limits disclosed herein may be combined.

Moreover, where a phrase similar to "at least one of A, B, and C" is used in the claims, it is intended that the phrase be interpreted to mean that A alone may be present in an embodiment, B alone may be present in an embodiment, C alone may be present in an embodiment, or that any combination of the elements A, B, and C may be present in a single embodiment; for example, A and B, A and C, B and C, or A and B and C. Different cross-hatching is used throughout the figures to denote different parts, but not necessarily to denote the same or different materials.

The steps recited in any of the method or process descriptions may be executed in any order and are not necessarily limited to the order presented. Furthermore, any reference to singular includes plural embodiments, and any reference to more than one component or step may include a singular embodiment or step. Elements and steps in the figures are illustrated for simplicity and clarity and have not necessarily been rendered according to any particular sequence. For example, steps that may be performed concurrently or in different order are only illustrated in the figures to help to improve understanding of embodiments of the present, representative disclosure.

Any reference to attached, fixed, connected, or the like may include permanent, removable, temporary, partial, full and/or any other possible attachment option. Additionally, any reference to without contact (or similar phrases) may also include reduced contact or minimal contact. Surface shading lines may be used throughout the figures to denote different parts or areas, but not necessarily to denote the same or different materials. In some cases, reference coordinates may be specific to each figure.

Systems, methods, and apparatus are provided herein. In the detailed description herein, references to "one embodiment," "an embodiment," "various embodiments," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments, whether or not explicitly described. After reading the description, it will be apparent to one skilled in the relevant art(s) how to implement the disclosure in alternative embodiments.

Furthermore, no element, component, or method step in the present disclosure is intended to be dedicated to the public regardless of whether the element, component, or method step is explicitly recited in the claims. As used herein, the terms "comprises," "comprising," or any other variation thereof, are intended to cover a non-exclusive inclusion, such that a process, method, article, or apparatus that comprises a list of elements does not include only those elements, but it may also include other elements not expressly listed or inherent to such process, method, article, or apparatus.

## Claims

1. A brake wear monitoring system (200), comprising:
a processing unit;
a plurality of linear Hall sensors (204) in electronic communication with the processing unit;
a wear pin (206) coupled to a brake stack, the wear pin comprising a magnetic portion (207);
wherein the plurality of linear Hall sensors are configured to detect a position of the wear pin relative to the plurality of linear Hall sensors via the magnetic portion, and
the processing unit is configured to generate an output signal, based upon the position of the wear pin relative to the plurality of linear Hall sensors, to indicate a wear status of the brake stack.

2. The brake control system of claim 1, further comprising a housing (208), wherein the plurality of linear Hall sensors are disposed within the housing.

3. The brake control system of claim 2, wherein the wear pin extends into the housing.

4. The brake control system of claim 2 or 3, wherein the magnetic portion of the wear pin is disposed in the housing.

5. The brake control system of any preceding claim, wherein the magnetic portion of the wear pin defines a tip of the wear pin.

6. The brake control system of any preceding claim, wherein the plurality of linear Hall sensors are disposed along an axis (290) of the wear pin.

7. The brake control system of any preceding claim, further comprising a piston housing (140).

8. The brake control system of claim 7, wherein the housing (208) is disposed opposite the piston housing (140) from the brake stack (126).

9. A braking arrangement, comprising:
a brake stack (126); and
the brake wear monitoring system (200) of any preceding claim.

10. The brake control system of claim 9 when dependent upon claim 8, wherein the wear pin extends through the piston housing.

11. The brake control system of claim 9 or 10, wherein the wear pin is coupled to a pressure plate (118).

12. A method for brake wear monitoring, comprising:
receiving, by a controller (202), a feedback signal from a plurality of linear Hall sensors (204), wherein the plurality of linear Hall sensors are disposed along a line of action of a wear pin (206);
calculating, by the controller, a position of the wear pin, wherein the plurality of linear Hall sensors detect the position of the wear pin via a magnetic portion (207) of the wear pin; and
sending, by the controller, a wear status signal to indicate a wear status of a brake stack.

13. The method of claim 12, wherein the feedback signal includes:
a first position of the wear pin detected via a first linear Hall sensor;
a second position of the wear pin detected via a second linear Hall sensor; and
an nth position of the wear pin detected via an nth linear Hall sensor, where n is the total number of linear Hall sensors.

14. The method of claim 12 or 13, wherein the total number of linear Hall sensors are each positioned at a distance from each other to allow continuous measurement of the wear pin position for an entire range of the brake wear.
